# FASCICULE DE BREVET EUROPEEN

(11) **EP 1 737 008 B1**
(45) Date de publication et mention de la délivrance du brevet: **20.03.2013**
(21) Numéro de dépôt: 06290820.7
(22) Date de dépôt: 22.05.2006
(51) Int. Cl.: H01H 9/18, H01H 9/16, H01R 13/717

(54) **Appareillage électrique comprenant des moyens d'éclairement embarqués sur le support d'appareillage**
Elektrisches Gerät mit auf der Halterung des Geräts gelagerten Beleuchtungsmitteln
Electrical apparatus comprising lighting means mounted on supporting means of the apparatus

(30) Priorité: 20.06.2005 FR 0506210
(43) Date de publication de la demande: 27.12.2006
(73) Titulaire: Legrand France, 87000 Limoges (FR); Legrand SNC, 87000 Limoges (FR)
(72) Inventeur: Belet, Tony, 87000 Limoges (FR); Daccord, Marcel, 87920 Condat sur Vienne (FR); Janicot, Laurent, 87110 Solignac (FR); Maneyrol, Emmanuel, 87120 Sainte Anne Saint Priest (FR); Mourgaud, Jean-François, 87220 Feytiat (FR)
(74) Mandataire: Orsini, Fabienne

(56) Documents cités:
- EP-A- 1 467 387
- EP-A1- 0 491 534
- FR-A- 2 311 396
- GB-A- 1 001 951
- GB-A- 2 251 980
- US-A- 4 038 582
- US-A1- 2001 046 130
- US-A1- 2005 012 633
- US-B1- 6 350 039

## Description

### DOMAINE TECHNIQUE AUQUEL SE RAPPORTE L'INVENTION

La présente invention concerne de manière générale les appareillages électriques qui comprennent des supports pour rapporter un quelconque mécanisme d'appareillage, tel que par exemple un mécanisme d'interrupteur ou de prise de courant, dans une boîte à encastrer dans une paroi quelconque, dans un boîtier ou dans une goulotte électrique à rapporter en saillie d'une telle paroi.

Elle concerne en particulier un appareillage électrique comprenant un support pourvu de moyens de montage d'au moins un socle de mécanisme d'appareillage électrique, une plaque enjoliveur rapportée sur ledit support et des moyens d'éclairement propres à l'éclairage d'une zone de façade dudit appareillage.

L'invention trouve une application particulièrement avantageuse dans la réalisation d'un interrupteur électrique à fonction lumineuse, visible dans l'obscurité et/ou à fonction témoin indiquant à l'usager son état de fonctionnement.

### ARRIERE-PLAN TECHNOLOGIQUE

On connaît déjà des documents FR 2 790 865, GB 2 083 708 et EP 1 467 387 des appareillages électriques du type précité qui intègrent une fonction lumineuse pour être repérés dans une pièce sombre et/ou indiquer à l'usager leur état de fonctionnement (ouvert ou fermé).

Dans ces appareillages électriques déjà connus, les moyens d'éclairement comprennent une source lumineuse (une diode ou une ampoule à filaments) disposées à l'intérieur du boîtier d'appareillage pour éclairer directement ou indirectement la touche de commande accessible à l'usager.

Cette source lumineuse est montée sur un support dédié et est raccordée électriquement au mécanisme d'appareillage.

En outre, dans ces appareillages électriques déjà connus, les moyens d'éclairement comprennent des moyens de guidage ou de réflexion de la lumière embarqués dans la touche de commande ou positionnés juste en dessous de cette touche de commande. Ces moyens de guidage ou de réflexion permettent soit de guider la lumière émise par la source lumineuse, soit d'accentuer le pouvoir lumineux de la source lumineuse sur une zone précise de la touche de commande.

Enfin, on connaît du document US 6 350 039, un appareillage électrique dont les moyens d'éclairement comprennent des diodes embarquées sur une sous-plaque de circuit imprimé montée à l'arrière d'une plaque diffuseur de lumière encliquetée sur une plaque formant un guide de lumière. Par ailleurs, il comprend un support d'appareillage qui, de manière classique, se présente sous la forme d'un cadre délimitant une ouverture centrale dans laquelle est monté ici un mécanisme de prise de courant. La paroi arrière du guide de lumière comporte une feuille en matériau réfléchissant qui oriente le flux de lumière émis par ies diodes perpendiculairement au plan de la plaque diffuseur au travers de la paroi avant inclinée du guide de lumière de sorte que le flux lumineux éclaire uniquement la façade de ladite plaque.

On connaît également du document US 2005/0012633 A1 un appareillage électrique mural comportant un support accueillant un mécanisme d'interrupteur électrique et entouré d'une plaque de couverture. Des moyens d'éclairage embarqués sur le support éclairent une fenêtre transparente latérale de la plaque de couverture.

De tels appareillages électriques présentent plusieurs inconvénients.

Tout d'abord, les moyens d'éclairement de ces appareillages électriques sont complexes à monter dans le boîtier d'appareillage et ils ne sont pas accessoirisables.

En outre, dans de tels appareillages, la source lumineuse des moyens d'éclairement est difficilement accessible dans le boîtier d'appareillage. Ainsi, il est notamment difficile de récupérer une partie substantielle du flux lumineux émis par la source lumineuse pour la guider jusqu'à la touche de commande ou la plaque enjoliveur afin d'obtenir un éclairage correct de celle-ci.

Enfin de tels moyens d'éclairement ne permettent pas de former un halo de lumière autour de l'appareillage électrique correspondant.

### OBJET DE L'INVENTION

Afin de remédier aux inconvénients précités de l'état de la technique la présente invention propose un appareillage électrique tel que décrit dans la revendication 1.

Avantageusement, dans l'appareillage électrique selon l'invention, les moyens d'éclairement peuvent être accessoirisés du fait qu'ils sont totalement embarqués sur le support d'appareillage. Le montage de ces moyens d'éclairement sur le support d'appareillage est aisé.

En outre l'éclairement de la tranche de la plaque enjoliveur permet avantageusement de former un halo de lumière autour de l'appareillage électrique selon l'invention.

Enfin, avantageusement, on extrait facilement la lumière émise par la source lumineuse pour l'amener sur la tranche de la plaque enjoliveur.

D'autres caractéristiques avantageuses et non limitatives de l'appareillage électrique selon l'invention sont décrites dans les revendications 2 à 18.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés:
- la figure 1 est une vue schématique éclatée en perspective d'un premier mode de réalisation d'un appareillage électrique selon l'invention;
- la figure 2 est une vue schématique éclatée en perspective d'un deuxième mode de réalisation d'un appareillage électrique selon l'invention;
- la figure 3 est une vue schématique partiellement assemblée de l'appareillage de la figure 2 ;
- la figure 4 est une vue schématique éclatée en perspective du support et des moyens d'éclairement de l'appareillage électrique de la figure 1 ; et
- la figure 5 est une vue de dessous de la figure 4.

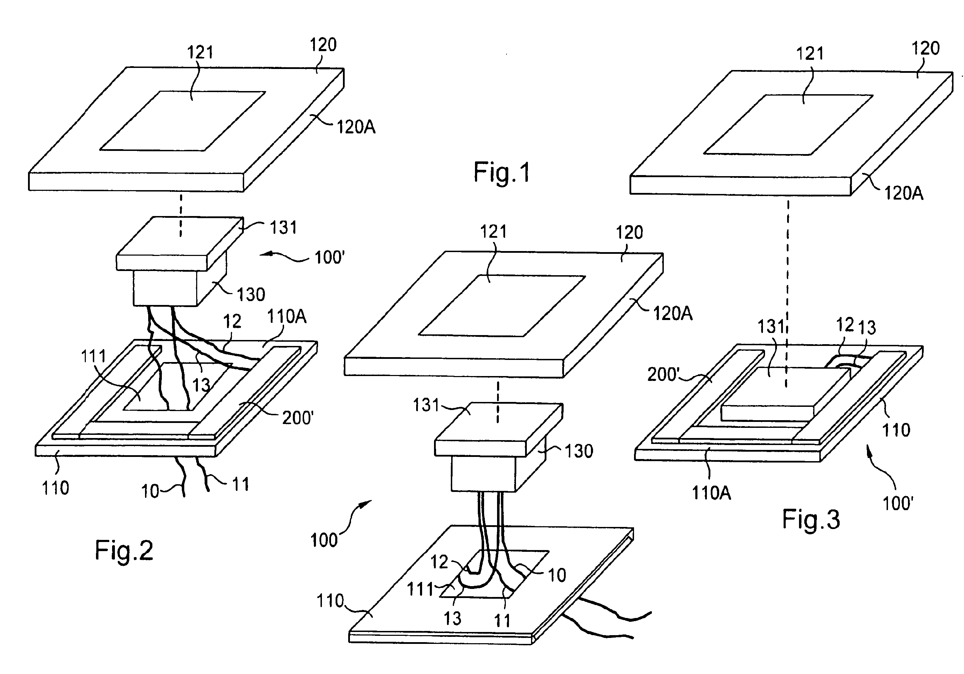

Sur les figures 1 à 3, on a représenté deux variantes d'un appareillage électrique 100 ;100' qui comprend un support 110 d'appareillage électrique destiné à être fixé sur une boîte (non représentée) tel qu'une boîte à encastrer dans une paroi quelconque, par exemple, une paroi alvéolaire ou un boîtier à rapporter en saillie sur une telle paroi.

Le support 110 sert au montage à l'intérieur de la boîte ou du boîtier d'un ou plusieurs mécanismes d'appareillage 130, tels qu'un mécanisme d'interrupteur, de prise de courant, de prise de téléphone, de disjoncteur.

Il comprend un cadre plat de forme carrée, ici réalisé avantageusement en matière plastique moulée. Le cadre est défini entre un bord périphérique extérieur et un bord périphérique intérieur qui délimite une ouverture centrale 111 également de forme carrée.

Comme le montrent plus particulièrement les figures 1 à 3, l'ouverture centrale 111 du support 110 est destinée à accueillir un ou plusieurs socles de mécanisme d'appareillage 130.

L'ouverture centrale 111 carrée du support 110 accueille ici un socle deux modules dont la façade de forme carrée remplit la surface de l'ouverture centrale 111, mais il peut également accueillir deux socles un module dont chaque façade de forme rectangulaire remplit la moitié de la surface de l'ouverture centrale.

Pour le montage de chaque socle de mécanisme d'appareillage 130, l'ouverture centrale 111 du support 110 est bordée sur ses quatre côtés de moyens de montage, ici des moyens d'encliquetage, qui comprennent une nervure d'accrochage 111A formant un bord tombant à partir de la face avant 110A du support 110.

Sur cette nervure d'accrochage 111A sont destinées à s'accrocher des dents d'encliquetage (non représentées) prévues en saillie de deux faces opposées du socle de mécanisme d'appareillage 130.

Le support 110 comporte sur deux côtés parallèles des ouvertures 113 traversantes, en forme de haricot, destinées à accueillir des vis de fixation (non représentées) à la boîte ou au boîtier d'appareillage.

En outre, le support 110 comporte sur les deux autres côtés parallèles des moyens d'encliquetage 112 qui émergent sur sa face avant 110A et qui sont destinés au montage sur ledit support 110 d'une plaque enjoliveur 120.

En effet, selon les deux variantes représentées, l'appareillage électrique 100 ;100' comporte une plaque enjoliveur 120 rapportée sur ledit support 110. Cette plaque enjoliveur 120 se présente sous la forme d'un cadre, également de forme carrée, qui est bordé extérieurement par un rebord 120A formant la tranche de ladite plaque enjoliveur. Cette plaque enjoliveur 120 présente une ouverture centrale 121 au travers de laquelle émerge une ou plusieurs touches de commande de mécanisme d'appareillage pour être accessible à l'usager. Ici il est prévu une touche de commande 131 rapportée sur le socle 130 du mécanisme d'appareillage correspondant.

Préférentiellement, ladite plaque enjoliveur 120 comporte une partie de façade opaque (non représentée) et une partie arrière translucide (non représentée) formant au moins une partie de la tranche 120A de la plaque enjoliveur 120.

La partie arrière translucide est rapportée par encliquetage ou par vissage ou par soudure sur la face arrière de la partie de façade opaque.

La partie de façade peut s'étendre sur un côté de la plaque enjoliveur 120 de sorte que ladite partie arrière translucide forme les trois autres côtés de ladite plaque enjoliveur. Bien entendu selon une variante la partie arrière translucide peut former les quatre côtés de la plaque enjoliveur.

Avantageusement, ladite partie de façade opaque est réalisée en matière métallique et ladite partie arrière est réalisée en matière plastique moulée.

En outre, avantageusement, l'appareillage électrique 100 ;100' comporte une fonction lumineuse de sorte qu'il est visible dans l'obscurité, et/ou une fonction témoin indiquant à l'usager son état de fonctionnement.

À cet effet, il comporte des moyens d'éclairement 200 ;200' propres à l'éclairage d'une zone de façade dudit appareillage.

Selon le mode de réalisation représenté sur les figures 2 et 3, lesdits moyens d'éclairement 200' sont rapportés en accessoire sur la face avant 110A dudit support 110 tournée vers ladite plaque enjoliveur 120. Ils sont connectés électriquement par des conducteurs électriques 12,13 aux bornes de connexion du mécanisme d'appareillage 130 rapporté sur le support 110.

Selon le mode de réalisation préférentiel représenté sur les figures 1, 4 et 5, lesdits moyens d'éclairement 200 sont rapportés sur la face arrière 110B dudit support 110 tournée à l'opposé de ladite plaque enjoliveur 120. Avantageusement, selon ce mode de réalisation, lesdits moyens d'éclairement 200 sont situés du côté des bornes de connexion du mécanisme d'appareillage 130 monté sur le support 110 et peuvent être facilement connectés, aux moyens de conducteurs électriques 12,13, à ces bornes qui sont elles-mêmes raccordées au réseau d'alimentation électrique par des conducteurs 10,11.

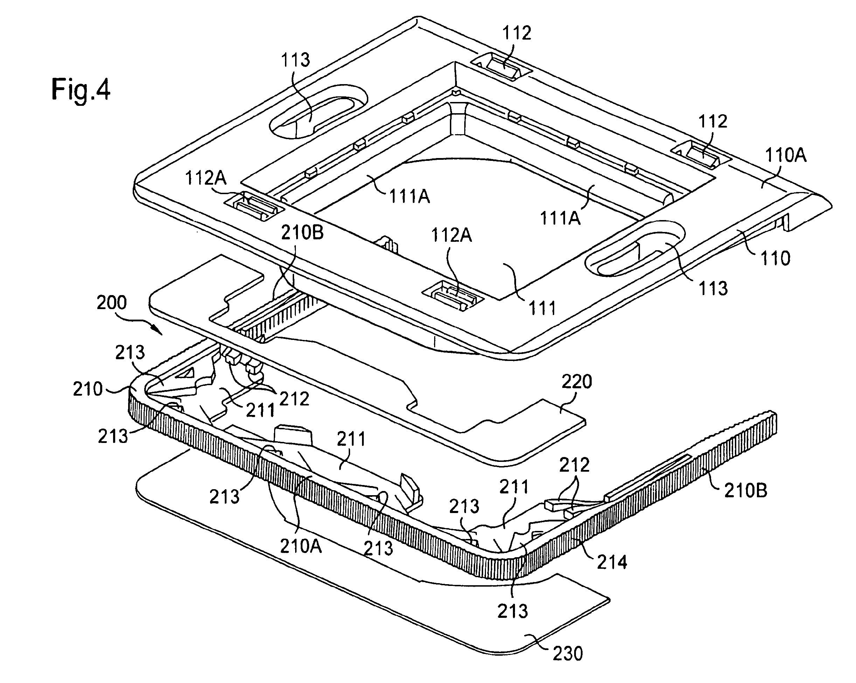

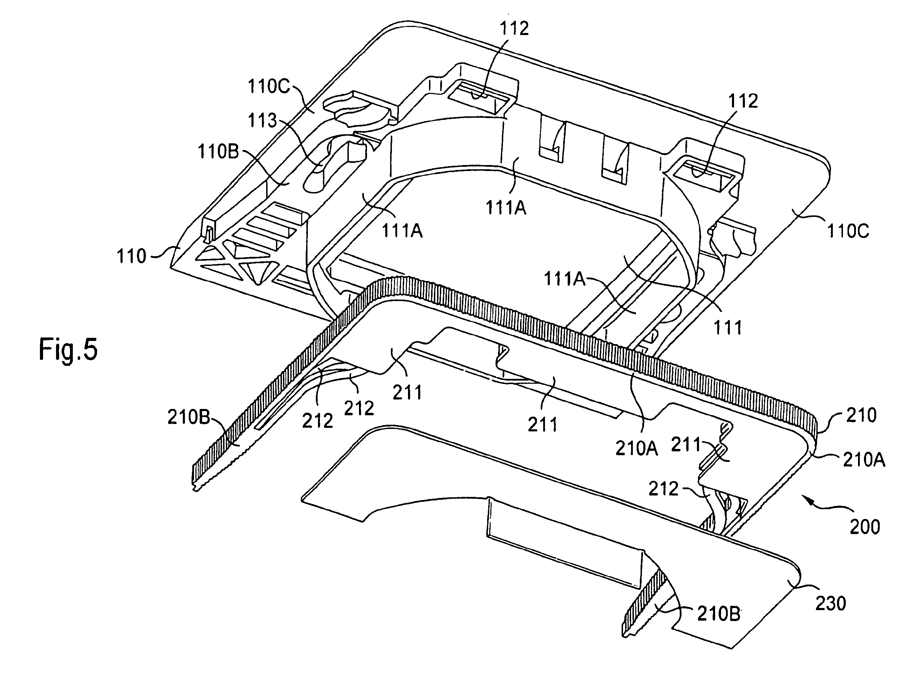

Comme le montre plus particulièrement les figures 4 et 5, lesdits moyens d'éclairement 200 comprennent une source lumineuse et un guide optique 210 adapté à guider le flux lumineux émis par la source lumineuse jusqu'à la tranche 120A de ladite plaque enjoliveur 120.

Ici, préférentiellement, ladite source lumineuse comprend des diodes raccordées à un circuit imprimé alimenté en courant par les conducteurs électriques 12,13 via les bornes de connexion du mécanisme d'appareillage monté sur le support 110.

Selon le mode de réalisation représenté sur les figures 4 et 5, lesdits moyens d'éclairement 200 sont logés dans l'épaisseur du support 110. Ainsi l'encombrement global de l'appareillage électrique 100 est optimisé.

Pour cela, comme le montrent la figure 5, ladite face arrière 110B du support 110 comporte un renfoncement 110C qui forme un logement accueillant la carte de circuit imprimé 220 avec les diodes connectées audit circuit imprimé, ledit logement étant fermé par un couvercle transparent 210 qui forme le guide optique apte à guider le flux lumineux émis par lesdites diodes vers la tranche 120A de la plaque enjoliveur 120.

Ici, la plaque enjoliveur 120 et le support 110 présentant une forme carrée, ledit renfoncement 110C du support 110 et le couvercle transparent 210 associé s'étendent le long de trois côtés du support 110 et donc le long de trois côtés de ladite plaque enjoliveur 120 pour éclairer lesdits côtés.

La forme du couvercle transparent 210 est adaptée à celle du renfoncement 110C.

Ici, ledit couvercle transparent 210 présente globalement une forme plate en U.

Plus particulièrement, Le couvercle transparent 210 comporte un conduit 210A en U qui suit le bord du support 110 et qui s'étend en regard des trois côtés du rebord 120A de la plaque enjoliveur 120 formant la tranche à éclairer de celle-ci.

Ce conduit 210A en U guide la lumière émise par ladite source lumineuse le long des trois côtés à éclairer de la tranche 120A de ladite plaque enjoliveur 120.

Le couvercle transparent comporte une plateforme 211 centrale et deux plateformes 211 latérales qui s'étendent, à partir dudit conduit 210A, à la base et à l'intérieur du U.

Ces plateformes 211 ferment ledit logement 110C creusé dans la face arrière 110B du support 110 de manière que la carte de circuit imprimé 220 à laquelle sont connectées les diodes soit prise en sandwich entre la face arrière 110B du support 110 et lesdites plateformes 211.

Le couvercle transparent 210 comporte également des conduits spécifiques 212 qui s'étendent à partir des plateformes 211 latérales jusque dans les branches du conduit 210A en U pour guider une partie du flux lumineux émis dans une partie d'extrémité de ces branches.

Lorsque la carte de circuit imprimé 220 avec les diodes est placée entre la face arrière 110B du support 110 et lesdites plateformes 211 du couvercle transparent 210, l'entrée de chaque conduit spécifique 212 du couvercle transparent 210 est positionnée en regard d'au moins une diode.

Ce couvercle transparent 210 comporte également des parties massives 213 en triangle, disposées sur lesdites plateformes 211 en regard de diodes adaptées à guider la lumière émise par lesdites diodes dans la base et les branches dudit conduit 210A en U.

Les parties massives parties 213 et les conduits spécifiques 212 dudit couvercle transparent 210 récupèrent la lumière émise par lesdites diodes et l'amènent dans ledit conduit 210A en U qui la diffuse le long de la tranche 120A translucide de la plaque enjoliveur 120.

Afin de renforcer son pouvoir de diffusion de la lumière, ledit couvercle transparent 210 présente sur la tranche de son conduit 210A en U des stries 210B.

Le couvercle transparent 210 est réalisé d'une seule pièce en matière plastique moulée comme du polycarbonate transparent ou du polymétacrylate de méthyle acrylonitrile transparent.

Le couvercle transparent 210 est avantageusement soudé par ultrasons ou collé sur la face arrière 210A du support 210 en prenant en sandwich la carte de circuit imprimé 220 avec les diodes connectées audit circuit imprimé. Le soudage par ultrason permet de réaliser un assemblage du couvercle transparent 210 avec le support 110 qui présente une grande rigidité.

Par ailleurs il est prévu en dessous dudit couvercle transparent 210 une plaque opaque 230 d'isolation électrique pour respecter des normes d'isolation électriques.

Lesdits moyens d'éclairement 200,200' permettent de réaliser un halo de lumière diffuse autour de la plaque enjoliveur 120 de l'appareillage électrique 100 ;100' de sorte que celui-ci est visible dans l'obscurité et/ou assure une fonction témoin indiquant à l'usager son état de fonctionnement.

Comme ces moyens d'éclairement 200,200' sont embarqués dans l'épaisseur du support 110 ils ne prennent pas de place supplémentaire dans le boîtier d'appareillage ce qui permet d'optimiser l'encombrement dudit appareillage.

Le couvercle transparent 210 récupère aisément l'ensemble du flux lumineux émis par la source lumineuse pour la diffuser par la tranche 120A de la plaque enjoliveur.

La présente invention n'est nullement limitée aux modes de réalisation décrits et représentés.

## Revendications

1. Appareillage électrique (100 ;100') comprenant un support (110) pourvu de moyens de montage d'au moins un socle de mécanisme d'appareillage électrique, une plaque enjoliveur (120) rapportée sur ledit support (110) et des moyens d'éclairement (200 ;200') propres à l'éclairage d'une zone de façade dudit appareillage, embarqués sur ledit support (110) et adaptés à éclairer ia tranche (120A) de ladite plaque enjoliveur (120), **caractérisé en ce que** lesdits moyens d'éclairement (200 ;200') comprennent une source lumineuse et un guide optique (210) adapté à guider le flux lumineux émis par la source lumineuse jusqu'à la tranche (120A) de ladite plaque enjoliveur (120).

2. Appareillage selon la revendication 1, **caractérisé en ce que** ladite source lumineuse comprend des diodes raccordées à un circuit imprimé.

3. Appareillage selon l'une des revendications 1 ou 2, **caractérisé en ce que** lesdits moyens d'éclairement (200') sont rapportés sur la face avant (110A) dudit support (110) tournée vers ladite plaque enjoliveur (120).

4. Appareillage selon l'une des revendications 1 ou 2, **caractérisé en ce que** lesdits moyens d'éclairement (200) sont rapportés sur la face arrière (110B) dudit support (110) tournée à l'opposé de ladite plaque enjoliveur (120).

5. Appareillage selon l'une des revendications 1 à 4, **caractérisé en ce que** lesdits moyens d'éclairement (200) sont logés dans l'épaisseur du support.

6. Appareillage selon les revendications 4 et 5, **caractérisé en ce que** ladite face arrière (110B) du support (110) comporte un renfoncement (110C) qui forme un logement accueillant une carte de circuit imprimé (220) et des diodes connectées audit circuit imprimé, ledit logement étant fermé par un couvercle transparent (210) qui forme un guide optique apte à guider le flux lumineux émis par lesdites diodes vers la tranche (120A) de la plaque enjoliveur.

7. Appareillage selon la revendication 6, **caractérisé en ce que** ladite plaque enjoliveur (120) présentant une forme carrée ou rectangulaire, ledit couvercle transparent (210) s'étend le long de trois côtés de ladite plaque enjoliveur pour éclairer lesdits côtés.

8. Appareillage selon l'une des revendications 6 ou 7, **caractérisé en ce que** ledit couvercle transparent (210) présente sur sa tranche des stries pour diffuser la lumière.

9. Appareillage selon l'une des revendications 6 à 8, **caractérisé en ce que** ledit couvercle transparent comporte un conduit (210A) en U, au moins une plateforme (211) qui s'étend à partir de ce conduit (210A) en U vers l'intérieur du U, et des conduits spécifiques (212) qui s'étendent à partir de la plateforme (211) jusque dans les branches dudit conduit (210A) en U pour guider une partie du flux lumineux émis dans une partie d'extrémité de ces branches.

10. Appareillage selon l'une des revendications 6 à 9, **caractérisé en ce que** ledit couvercle transparent (210) est réalisé d'une seule pièce en matière plastique moulée comme du polycarbonate transparent ou du polymétacrylate de méthyle acrylonitrile transparent.

11. Appareillage selon la revendication 10, **caractérisé en ce que** ledit couvercle transparent (210) est soudé par ultrasons ou collé audit support (110).

12. Appareillage selon l'une des revendications 6 à 11, **caractérisé en ce qu'**il est prévu en dessous dudit couvercle transparent (210) une plaque opaque (230) d'isolation électrique.

13. Appareillage selon l'une quelconque des revendications précédentes, **caractérisé en ce que** le support (110) est réalisé en matière plastique moulée.

14. Appareillage selon l'une quelconque des revendications 1 à 13, **caractérisé en ce que** ladite plaque enjoliveur (120) comporte une partie de façade opaque et une partie arrière translucide formant au moins une partie de la tranche de la plaque enjoliveur.

15. Appareillage selon la revendication 14, **caractérisé en ce que** la partie arrière translucide est rapportée sur la face arrière de la partie de façade opaque.

16. Appareillage selon l'une des revendications 14 ou 15, **caractérisé en ce que** la partie de façade s'étend sur un côté de la plaque enjoliveur (120), ladite partie arrière translucide formant les trois autres côtés de ladite plaque enjoliveur.

17. Appareillage selon l'une des revendications 14 à 16, **caractérisé en ce que** ladite partie de façade opaque est réalisée en matière métallique.

18. Appareillage selon l'une des revendications 14 à 17, **caractérisé en ce que** ladite partie arrière est réalisée en matière plastique moulée.

## Claims

1. Electrical equipment (100; 100') comprising a support (110) provided with means for mounting at least one electrical equipment mechanism base, a trim plate (120) fitted on said support (110), and lighting means (200; 200') suitable for lighting a façade zone of said equipment, mounted on said support (110), and adapted to light the edge face (120A) of said trim plate (120), the equipment being **characterized in that** said lighting means (200; 200') comprise a light source and a light guide (210) adapted to guide the light flux emitted by the light source to the edge face (120A) of said trim plate (120).

2. Equipment according to claim 1, **characterized in that** said light source comprises light-emitting diodes (LEDs) connected to a printed circuit.

3. Equipment according to claim 1 or claim 2, **characterized in that** said lighting means (200') are fitted on the front face (110A) of said support (110) facing towards said trim plate (120).

4. Equipment according to claim 1 or claim 2, **characterized in that** said lighting means (200) are fitted on the rear face (110B) of said support (110) facing away from said trim plate (120).

5. Equipment according to any one of claims 1 to 4, **characterized in that** said lighting means (200) are housed in the thickness of the support.

6. Equipment according to claims 4 and 5, **characterized in that** said rear face (110B) of the support (110) includes a setback (110c) that forms a housing receiving a printed circuit card (220) and LEDs connected to said printed circuit, said housing being closed by a transparent cover (210) that forms a light guide suitable for guiding the light flux emitted by said LEDs towards the edge face (120A) of the trim plate.

7. Equipment according to claim 6, **characterized in that** said trim plate (120) is square or rectangular in shape, said transparent cover (210) extending along three sides of said trim plate in order to illuminate said sides.

8. Equipment according to claim 6 or claim 7, **characterized in that** said transparent cover (210) presents light-diffusing serrations in its edge face.

9. Equipment according to any one of claims 6 to 8, **characterized in that** said transparent cover includes a U-shaped light pipe (210A), at least one platform (211) that extends from said U-shaped light pipe (210A) towards the inside of the U-shape, and specific light pipes (212) that extend from the platform (211) into the branches of said U-shaped light pipe (210A) for guiding a portion of the emitted light flux into end portions of said branches.

10. Equipment according to any one of claims 6 to 9, **characterized in that** said transparent cover (210) is made from a single piece of molded plastics material such as transparent polycarbonate or transparent polymethyl methacrylate acrylonitrile.

11. Equipment according to claim 10, **characterized in that** said transparent cover (210) is bonded to said support (110) by ultrasound welding or by adhesive.

12. Equipment according to any one of claims 6 to 11, **characterized in that** an electrically-insulating opaque plate (230) is provided below said transparent cover (210).

13. Equipment according to any preceding claim, **characterized in that** the support (110) is made of molded plastics material.

14. Equipment according to any one of claims 1 to 13, **characterized in that** said trim plate (120) includes an opaque façade portion and a translucent rear portion forming at least a portion of the edge face of the trim plate.

15. Equipment according to claim 14, **characterized in that** the translucent rear portion is fitted on the rear face of the opaque façade portion.

16. Equipment according to claim 14 or claim 15, **characterized in that** the façade portion extends over one side of the trim plate (120), said translucent rear portion forming the other three sides of said trim plate.

17. Equipment according to any one of claims 14 to 16, **characterized in that** said opaque façade portion is made of metallic material.

18. Equipment according to any one of claims 14 to 17, **characterized in that** said rear portion is made of molded plastics material.

## Patentansprüche

1. Elektrischer Gerätemechanismus (100; 100') mit einer, für die Montage von mindestens einem Sockel für den elektrischen Gerätemechanismus mit Montagemitteln ausgestatteten Halterung (110), einer auf der Halterung (110) aufgesetzten Zier- und Abdeckplatte (120) und Beleuchtungsmitteln (200; 200') eigens für die Beleuchtung eines Frontbereichs des Gerätemechanismus, die in die Halterung (110) eingebaut sind und sich zur Beleuchtung des Randes (120A) der Zier- und Abdeckplatte (120) eignen, **dadurch gekennzeichnet, dass** die Beleuchtungsmittel (200; 200') eine Lichtquelle und einen optischen Wellenleiter (210) umfassen, der sich dazu eignet, den von der Lichtquelle abgegebenen Lichtstrom bis zum Rand (120A) dieser Zier- und Abdeckplatte (120) zu leiten.

2. Gerätemechanismus nach Anspruch 1, **dadurch gekennzeichnet, dass** die Lichtquelle an eine gedruckte Schaltung angeschlossene Dioden umfasst.

3. Gerätemechanismus nach einem der Ansprüche 1 oder 2, **dadurch gekennzeichnet, dass** die Beleuchtungsmittel (200') auf der in Richtung Zier- und Abdeckplatte (120) gerichteten Frontseite (110A) der Halterung (110) aufgesetzt sind.

4. Gerätemechanismus nach einem der Ansprüche 1 oder 2, **dadurch gekennzeichnet, dass** die Beleuchtungsmittel (200) auf der in entgegengesetzter Richtung zur Zier- und Abdeckplatte (120) gerichteten Rückseite (110B) der Halterung (110) aufgesetzt sind.

5. Gerätemechanismus nach einem der Ansprüche 1 bis 4, **dadurch gekennzeichnet, dass** die Beleuchtungsmittel (200) in der Dicke der Halterung untergebracht sind.

6. Gerätemechanismus nach den Ansprüchen 4 und 5, **dadurch gekennzeichnet, dass** die Rückseite (110B) der Halterung (110) eine Vertiefung (110C) umfasst, die eine Aufnahme für eine Schaltkreisplatine (220) und daran angeschlossene Dioden bildet, wobei diese Aufnahme durch einen durchsichtigen (210) Deckel abgedeckt ist, der einen optischen Wellenleiter bildet, welcher den von den Dioden abgegebenen Lichtstrom zum Rand (120A) der Zier- und Abdeckplatte leiten kann.

7. Gerätemechanismus nach Anspruch 6, **dadurch gekennzeichnet, dass** die Zier- und Abdeckplatte (120) eine quadratische oder rechteckige Form hat und der durchsichtige Deckel (210) sich entlang der drei Seiten der Zier- und Abdeckplatte (120) erstreckt, um diese Seiten zu beleuchten.

8. Gerätemechanismus nach einem der Ansprüche 6 oder 7, **dadurch gekennzeichnet, dass** der durchsichtige Deckel (210) an seinem Rand zur Diffusion des Lichts Riefelungen aufweist.

9. Gerätemechanismus nach einem der Ansprüche 6 bis 8, **dadurch gekennzeichnet, dass** der durchsichtige Deckel eine U-förmige Lichtleitung (210A), mindestens eine Plattform (211), die sich ab dieser U-förmigen Lichtleitung (210) in die U-Innenseite erstreckt, sowie spezifische Leitungen (212) aufweist, die sich ab der Plattform (211) bis in die Zweige der U-förmigen Lichtleitung (210A) erstrecken, um einen Teil des abgegebenen Lichtstroms in einen Randbereich dieser Zweige zu leiten.

10. Gerätemechanismus nach einem der Ansprüche 6 bis 9, **dadurch gekennzeichnet, dass** der durchsichtige Deckel (210) aus einem einzigen gussgeformten Kunststoffteil hergestellt ist, wie zum Beispiel aus durchsichtigem Polycarbonat oder aus durchsichtigem Methylacrylonitril-Polymetacrylat.

11. Gerätemechanismus nach Anspruch 10, **dadurch gekennzeichnet, dass** der durchsichtige Deckel (210) per Ultraschall auf die Halterung (110) geschweißt oder geklebt wird.

12. Gerätemechanismus nach einem der Ansprüche 6 bis 11, **dadurch gekennzeichnet, dass** unter dem durchsichtigen Deckel (210) eine lichtundurchlässige Platte (230) zur elektrischen Isolierung vorgesehen ist.

13. Gerätemechanismus nach einem der vorausgehenden Ansprüche, **dadurch gekennzeichnet, dass** die Halterung (110) aus gussgeformtem Kunststoff hergestellt wird.

14. Gerätemechanismus nach einem der Ansprüche 1 bis 13, **dadurch gekennzeichnet, dass** die Zier- und Abdeckplatte (120) ein lichtundurchlässiges Fassadenteil und ein durchsichtiges Hinterteil umfasst, das mindestens einen Teil des Randes der Zier und Abdeckplatte bildet.

15. Gerätemechanismus nach Anspruch 14, **dadurch gekennzeichnet, dass** das durchsichtige Hinterteil auf die Rückseite des lichtundurchlässigen Fassadenteils aufgesetzt wird.

16. Gerätemechanismus nach einem der Ansprüche 14 oder 15, **dadurch gekennzeichnet, dass** sich das Fassadenteil auf einer Seite der Zier- und Abdeckplatte (120) erstreckt, wobei das durchsichtige Hinterteil die drei anderen Seiten der Zier- und Abdeckplatte bildet.

17. Gerätemechanismus nach einem der Ansprüche 14 bis 16, **dadurch gekennzeichnet, dass** das undurchsichtige Fassadenteil aus Metall gefertigt ist.

18. Gerätemechanismus nach einem der Ansprüche 14 bis 17, **dadurch gekennzeichnet, dass** das Hinterteil aus einem gussgeformten Kunststoff gefertigt ist.
